# EUROPÄISCHE PATENTSCHRIFT

(11) **EP 1 314 506 B1**
(45) Veröffentlichungstag und Bekanntmachung des Hinweises auf die Patenterteilung: **02.09.2009**
(21) Anmeldenummer: 02023852.3
(22) Anmeldetag: 24.10.2002
(51) Int. Cl.: B23G 5/06

(54) **Gewindeschneidwerkzeug**
Thread cutting tool
Outil de taraudage

(30) Priorität: 14.11.2001 DE 10155979
(43) Veröffentlichungstag der Anmeldung: 28.05.2003
(73) Patentinhaber: Sandvik Intellectual Property AB, 811 81 Sandviken (SE)
(72) Erfinder: Schwarz, Friedrich, 77963 Schwanau (DE)
(74) Vertreter: Weber, Roland

(56) Entgegenhaltungen:
- DE-U- 9 007 778
- FR-A- 2 623 114
- FR-A- 2 739 314

## Beschreibung

Die vorliegende Erfindung bezieht sich auf ein Gewindeschneidwerkzeug zum Schneiden von Innengewinden mit einem Schaft und einem Schneidenabschnitt, der aus mehreren je einer Gruppe von Schneidzähnen aufweisenden achsparallel oder spiralig angeordneten Schneidstollen und dazwischen verlaufenden Spannuten besteht, wobei mindestens ein Teil der Schneidzähne auf den Freiflächen hinter den jeweiligen Schneidkanten eine radiale Hinterschneidung aufweist,

Der Begriff "Gewindeschneidwerkzeug" soll dabei allgemein sogenannte Gewindebohrer aber auch gewisse Typen von Gewindefräsern umfassen, soweit sie jeweils für die Herstellung von Innengewinden vorgesehen sind. Ein solches Gewindeschneidwerkzeug stellt entweder selbst die Gewindebohrung, konkret gesagt die Kernbohrung eines Gewindes her, oder aber es wird in eine bereits vorbereitete Bohrung eingedreht, deren Durchmesser in einem, im allgemeinen von dem Material des Werkstücks abhängigen Verhältnis zum endgültigen Gewindedurchmesser steht. Dabei wird das Gewindeschneidwerkzeug mit einem auf seine Drehzahl genau abgestimmten Vorschub in die Bohrung eingedreht, wobei die Schneidzähne, die in mehreren im wesentlichen parallel verlaufenden Gruppen (Schneidstollen genannt) angeordnet sind, die Gewindegänge schneiden. Bei einem eingängigen Gewinde entspricht dabei der Abstand der in axialer Richtung jeweils hintereinander angeordneten Schneidzähne einer Gruppe genau der Gewindesteigung bzw. der Höhe eines Gewindeganges.

Im allgemeinen nimmt bei einem solchen Schneidwerkzeug in dem vorderen Bereich, dem sogenannten Anschnitt, der Außendurchmesser des Schneidwerkzeuges, ausgehend von der Spitze in axialer Richtung nach hinten zu, wobei die axial vorderen Schneidzähne breiter ausgeführt sind und den breiteren, radial weiter innen liegenden Abschnitt der Gewindenuten schneiden, während die nachfolgenden Schneidzähne auf einem zunehmend größeren Radius angeordnet sind und auf diese Weise die zwischen den Gewindeflanken liegenden Gewindenuten bis auf die gewünschte Tiefe ausschneiden, wobei die Gewindenuten mit zunehmendem Durchmesser, das heißt zum Nutgrund hin, immer schmaler werden und die Schneidzähne auch dementsprechend mit einem schmaleren Schneidrücken ausgebildet sind. Der Querschnitt der Schneidzähne entspricht dem Querschnitt der herzustellenden Gewindenuten, so daß die Nebenschneidkanten der Schneidzähne unter dem Flankenwinkel des Gewindes zueinander verlaufen, während die Hauptschneidkante den Grund der Gewindenut schneidet. Hinter dem Anschnitt befindet sich der Führungsbereich, in welchem der Schneidstollen zwar auch noch Zähne aufweist, die aber nicht oder kaum noch schneiden, sondern lediglich für eine fortgesetzt präzise Führung des Gewindeschneidwerkzeuges sorgen.

Insbesondere die vorderen Schneidzähne, also die Schneidzähne im Anschnittbereich, die die Gewindenut noch nicht bis zur vollen Tiefe schneiden, sind entsprechend breit ausgebildet, da sie den weiteren Teil des Gewindeprofils erzeugen. Die an die Hauptschneidkante eines Gewindestollens anschließende Freifläche hat im allgemeinen einen Freiwinkel zu der von der jeweiligen Hauptschneidkante erzeugten Umfangsfläche in der Größenordnung von 0,5° bis 10°, typischerweise von 1° - 2°.

Nachdem ein entsprechendes Gewindeschneidwerkzeug bis zu der gewünschten Tiefe in eine entsprechende Bohrung eingedreht worden ist und dabei das gewünschte Gewinde geschnitten hat, muß es während der axialen Rückzugbewegung auf die Gewindesteigung abgestimmt in Gegenrichtung gedreht werden und wird dabei sozusagen aus dem erzeugten Gewinde herausgeschraubt. Durch das Schneiden des Gewindes werden jedoch unvermeidlich auch Späne aus dem Werkstückmaterial erzeugt, die insbesondere im Falle von Sacklöchern während des Gewindeschneidens nur unvollständig aus der Gewindebohrung heraus befördert werden. Es kann daher geschehen, daß sich beim Herausdrehen des Gewindeschneidwerkzeuges aus der Gewindebohrung einzelne Späne zwischen Schneidzähnen und dem hergestellten Gewinde verklemmen und dabei nicht nur das hergestellte Gewinde beschädigen, sondern auch zu einem stärkeren Verschleiß der Gewindestollen beitragen. Insbesondere können bei sehr harten Materialien, wie z. B. bei hochlegierten Stählen, die auf den Freiflächen der Schneidzähne eingeklemmten Späne dazu führen, daß Teile der Schneidkanten ausbrechen. Insbesondere bei Gewindeschneidwerkzeugen, deren Schneidzähne oder gesamter Schneidenabschnitt aus Vollhartmetall bestehen und die bevorzugt für besonders harte Werkstoffe eingesetzt werden, ist die Gefahr von Schneidkantenausbrüchen durch verklemmte Späne besonders groß. Generell führen verklemmte Späne dazu, daß Gewindeschneidwerkzeuge schneller verschleißen.

Ein Gewindeschneidwerkzeug der eingangs genannten Art ist aus der FR 2 739 314 bekannt. Dieses Werkzeug weist in seinem Anschnittbereich Zähne auf, deren Zahndach, gesehen in einem Schnitt senkrecht zur Werkzeugachse und ausgehend von der in Umfangsrichtung vom liegenden Schneidkante, auf einer Spiralbahn mit kontinuierlich abnehmendem Radius verläuft. Mit dieser Maßnahme wird angestrebt, das Anwachsen des Drehmomentes beim Gewindeschneiden und die Kontaktfläche zwischen Schneidwerkzeug und Gewinde zu vermindern. Ein Einklemmen von Spänen wird aber auf Grund der kontinuierlichen Abnahme des Zahndachradius und des dadurch gebildeten keilförmigen Freiraumes zwischen Zahndach und Gewindegrund nicht wirksam vermieden.

Vor diesem Hintergrund liegt der vorliegenden Erfindung die Aufgabe zugrunde, ein Gewindeschneidwerkzeug mit den eingangs genannten Merkmalen zu schaffen, bei welchem der Verschleiß erheblich vermindert ist und welche deutlich höhere Standzeiten aufweisen als herkömmliche Gewindeschneidwerkzeuge. Diese Vorteile sollen vor allem beim Gewindeschneiden in relativ harten und/oder zähen metallischen Werkstoffen, wie z. B. Edelstahl, hervortreten. Insbesondere soll durch die vorliegende Erfindung erreicht werden, daß die Schneidkanten der Schneidzähne auch nach längerem Gebrauch des Gewindeschneidwerkzeuges weniger Beschädigungen und insbesondere weniger Ausbrüche aufweisen.

Diese Aufgabe wird dadurch gelöst, daß die Hinterschneidung (7) in einem Abstand hinter der Schneidkante (8) beginnt, der zwischen 5% und 50%, der in Umfangsrichtung gemessenen Schneidzahnlänge liegt), und, ausgehend von der Freifläche (11), abrupt mit einem Rücksprung beginnt, der eine überwiegend radiale Komponente hat, so daß der Grund (9) der Hinterschneidung, gesehen in einem axialen Schnitt, ausgehend von dem schneidkantennahen Abschnitt, zunächst im wesentlichen radial und dann zur Umfangsrichtung hin gekrümmt verläuft

Während üblicherweise und wie auch in dem oben erwähnten Stand der Technik die Freiflächen unter einem sehr kleinen und flachen Winkel relativ zu der von der jeweiligen Schneidkante erzeugten Umfangsfläche gekrümmt nach innen verlaufen, so daß sich zwischen Freifläche und Umfangsfläche ein sehr schmaler, keilförmiger Zwischenraum bildet, wird gemäß der vorliegenden Erfindung vorgesehen, daß diese Freifläche im Abstand zu der Schneidkante durch einen plötzlichen Rücksprung in radialer Richtung gebildet wird, so daß die Hinterschneidung deutlich zurück versetzt ist, also von der Schneidkante aus gesehen eine radiale Hinterschneidung bildet.

Dabei hat ein Anfangsabschnitt der Freifläche unmittelbar hinter der Schneidkante noch den üblichen Verlauf, um den Schneidkantenbereich des Schneidzahns nicht zu schwächen, weil er bei einem kleineren Keilwinkel dann möglicherweise den normalen Schneidkräften weniger gut standhalten würde. In genügendem Abstand zur Schneidkante jedoch wird der Abstand zwischen Freifläche und geschnittener Umfangsfläche durch die erwähnte Hinterschneidung deutlich vergrößert, d.h. der lange und sehr schmale keilförmig verlaufende Raum zwischen Freifläche und Umfangsfläche wird deutlich vergrößert, und dieser vergrößerte Freiraum endet erst in einem relativ kurzen Abstand zur Schneidkante. Etwaige Späne können sich dann zwar in die sem Freiraum ansammeln, werden jedoch zumindest zu Beginn der Rückwärtsdrehung problemlos mitgenommen, während der sehr schmale, keilförmige Freiraum zwischen Freifläche und Umfangsfläche auf einen sehr kurzen Abschnitt unmittelbar hinter der Schneidkante beschränkt bleibt, so daß sich dort praktisch keine Späne verklemmen können, insbesondere ist dort der Spalt zwischen Freifläche und Umfangsfläche noch so schmal, daß dort praktisch keine Späne eindringen können.

Das gleiche Problem tritt im Prinzip auch bei Gewindefräsern auf, die im Vorschub eine einfach Bohrung herstellen und erst in der Rückzugbewegung in einer exzentrischen Bewegungsbahn das Gewinde schneiden. In diesem Fall kann eine analoge Belastung der Schneidkanten während des Herstellens der Bohrung beim Vorschub auftreten, auch wenn wegen eines größeren Spiels der Schneidzähne in der mit einem solchen Werkzeug hergestellten Bohrung und wegen des möglichen Verzichts auf eine radial einwärts verlaufende Freifläche die Gefahr der Schneidkantenbeschädigung dabei etwas geringer ist. Gleichwohl ist die Erfindung analog auch auf solche Werkzeuge anwendbar.

Erfindungsgemäß beginnt die Hinterschneidung in einem Abstand hinter der Schneidkante, der etwa 5% bis 30% der in Umfangsrichtung gemessenen Schneidzahnlänge beträgt. Bevorzugt liegt dieser Abstand zwischen 10 und 30%, insbeondere zwischen15 und 25% der Schneidzahnlänge (gemessen in Umfangsrichtung). Hierdurch wird der erwähnte Effekt erreicht, daß der verbleibende Keilraum zwischen Freifläche und Umfangsfläche der Gewindebohrung sehr schmal ist und auf einen kurzen Abschnitt des Gewindestollens beschränkt bleibt.

Weiterhin ist erfindungsgemäß vorgesehen, daß die Hinterschneidung, ausgehend von der Freifläche, relativ abrupt mit einem Rücksprung beginnt, der eine überwiegend radiale Komponente hat. Auf diese Weise bildet sich eine relativ steile, im wesentlichen in radialer Richtung verlaufende Übergangsfläche vom Grund der Hinterschneidung zu dem nicht von der Hinterschneidung erfaßten Teil der Freifläche, und an dieser steilen Flanke werden sich möglicherweise in der Hinterschneidung ansammelnde Späne sehr gut in Rückwärtsrichtung mittransportiert, ohne daß die Gefahr besteht, daß diese Späne in den verbleibenden schmalen Spalt zwischen dem noch verbliebenen Freiflächenabschnitt und der Umfangsfläche eindringen.

Zweckmäßigerweise verläuft der Grund der Hinterschneidung, gesehen in einem axialen Schnitt, ausgehend von dem schneidkantennahen Abschnitt der Freifläche zunächst im wesentlichen radial und dann zur Umfangsrichtung hin gekrümmt oder auch einfach abgewinkelt. Auf diese Weise entsteht ein relativ gleichmäßig breiter Zwischenraum zwischen dem Grund der Hinterschneidung und der Umfangsfläche, der genügend Platz für die Aufnahme etwaiger Späne bietet.

Dabei läuft der Grund der Hinterschneidung bis zum hinteren Ende des Schneidzahnes hin und mindestens über die Hälfte der Schneidzahnlänge hinweg in etwa parallel zur Umfangsrichtung aus. Insbesondere ist es zweckmäßig, wenn der Grund der Hinterschneidung, vom radial am weitesten innen liegenden Punkt ausgehend, im wesentlichen parallel zur Umfangsrichtung verläuft, d.h. der Grund der Hinterschneidung hat zu der von dem Schneidzahn geschnittenen Wandung des Gewindes einen weitgehend konstanten Abstand. Selbstverständlich ist es auch möglich, daß, von dem tiefsten Punkt der Hinterschneidung ausgehend, der Grund der Hinterschneidung wieder leicht radial nach außen verläuft, so daß sich zum hinteren Ende des Schneidzahnes hin der Abstand zwischen Wandung des Gewindes und Grund der Hinterschneidung wieder etwas verringert. Die "Wandung" des Gewindes ist dabei der jeweils von dem in Rede stehenden Schneidzahn geschnittene Nutgrund.

Dabei hat es sich als besonders zweckmäßig erwiesen, wenn man für die maximale Tiefe der Hinterschneidung (gemessen in radialer Richtung) einen Wert einhält, der zwischen 2 und 10% des Radius des Gewindeschneidwerkzeuges liegt. Allerdings hängt dieser prozentuale Wert auch von dem absoluten Durchmesser des jeweiligen Gewindes bzw. Gewindeschneidwerkzeuges ab, da bei kleinen Gewindedurchmessern die Tiefe der Hinterschneidung relativ größer sein muß als bei großen Gewindedurchmessern. In absoluten Zahlen haben sich Tiefen der Hinterschneidung bewährt, die im Bereich von 0,5 bis 3 mm liegen, wobei die Tiefe der Hinterschneidung hier auch auf die Schneidkante des jeweiligen Schneidzahnes bezogen ist, d.h. die Tiefe ergibt sich als Differenz der Radien der Schneidkante und des Grundes der Hinterschneidung.

Generell kann man sagen, daß es sich insbesondere als zweckmäßig erwiesen hat, wenn die Tiefe der Hinterschneidung in etwa dem radialen Einzug einer herkömmlichen Freifläche am hinteren Ende eines Schneidzahnes entspricht. Aufgrund der im allgemeinen relativ konstanten Krümmung herkömmlicher Freiflächen, die typischerweise einen Winkel von etwa 1 - 2° mit der Umfangsrichtung einschließen, ergibt sich bei entsprechender Länge des Schneidzahnes am hinteren Ende des Schneidzahnes ein radialer Einzug, der ebenfalls etwa im Bereich von 0,5 bis 10% des Radius des Gewindeschneidwerkzeuges liegt. Erfindungsgemäß wird aber dieser radiale Einzug nicht auf den Endabschnitt des Schneidzahnes begrenzt, sondern erstreckt sich relativ weit bis zur Schneidkante hin, wo dann ein relativ abrupter Übergang auf den herkömmlichen Freiflächenverlauf erfolgt.

Für die meisten Anwendungsfälle hat es sich als ausreichend erwiesen, wenn die erfindungsgemäße Hinterschneidung auf die axial am weitesten vorn liegenden Schneidzähne, d. h. auf den sogenannten Anschnittbereich, beschränkt wird. Konkret reicht es im allgemeinen aus, wenn die ersten zwei bis fünf Schneidzähne eines Schneidstollens eine entsprechende Hinterschneidung aufweist. Die axial weiter hinten liegenden Schneidzähne schneiden praktisch nicht mehr, sondern haben im wesentlichen Führungsaufgaben, so dass dort keine oder nur eine geringere Spanbildung stattfindet und Späne sich auch nicht mehr auf der in diesem Bereich relativ schmalen Freifläche ansammeln. Insbesondere bei den vorderen, den Anschnitt bildenden und relativ breiten Schneidzähnen wirkt sich jedoch der Effekt der Hinterschneidung besonders deutlich aus, zumal es herkömmlich gerade die vorderen Schneidzähne sind, deren Schneidkante besonders schnell verschleißt.

Besonders bevorzugt ist es, wenn die vorliegende Erfindung in einem Gewindeschneidwerkzeug realisiert wird, welches aus Vollhartmetall hergestellt ist, da insbesondere Vollhartmetallwerkzeuge bei entsprechend schwierigen Werkstoffen eingesetzt werden, bei welchen die Gefahr des Beschädigens oder Ausbrechens von Schneidkanten besonders groß ist, zumal Vollhartmetall ohnehin leichter zum Ausbrechen neigt als herkömmlicher Werkzeugstahl.

Weiterhin ist die vorliegende Erfindung besonders zweckmäßig zu verwirklichen an Schneidwerkzeugen, bei denen die Gruppen von Schneidzähnen und die Spannuten im wesentlichen achsparallel oder mit einer sehr großen spiraligen Steigung verlaufen, da bei diesen Werkzeugtypen der Spantransport durch die Spannuten oft besonders schwach ausgeprägt ist und daher die Erfindung mit Vorteil die negativen Einflüsse der oft noch zahlreich vorhandenen Späne vermeidet.

Weitere Vorteile, Merkmale und Anwendungsmöglichkeiten der vorliegenden Erfindung werden deutlich anhand der folgenden Beschreibung einer bevorzugten Ausführungsform und der dazugehörigen Figuren. Es zeigen:

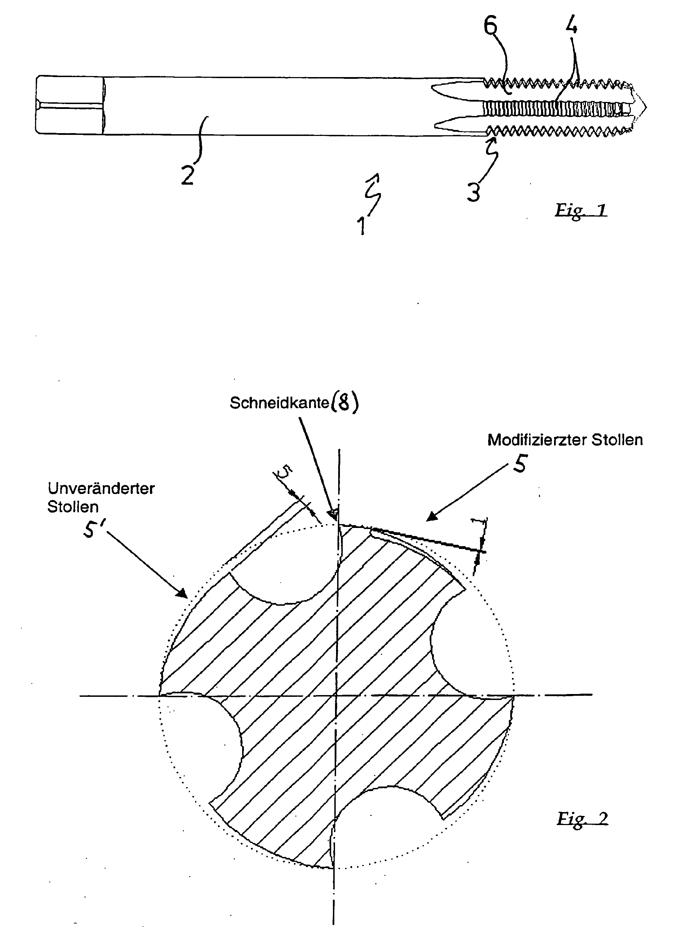

- Figur 1: die Seitenansicht eines Gewindebohrers,
- Figur: 2 einen Schnitt durch einen Gewindebohrer in etwa senkrecht zur Achse im Bereich eines der vorderen Gewindeschneidzähne,
- Figur: 3 einen vergrößerten Ausschnitt aus Figur 1, und
- Figur: 4 einen vergrößerten Ausschnitt aus Figur 2.

Man erkennt in Figur 1 das insgesamt mit 1 bezeichnete Gewindeschneidwerkzeug in Form eines Gewindebohrers, welcher einen Schaft 2 und einen Schneidenteil 3 aufweist. Der Schaft 2 ist hier als einfacher zylindrischer Schaft dargestellt, er kann jedoch auch eine beliebige andere Form haben, je nachdem, wie das entsprechende Futter oder Spannfutter einer Werkzeugmaschine ausgestaltet ist. Der Schneidenteil 3 weist mehrere Schneidstollen 4 auf, die jeweils aus einer Gruppe von Schneidzähnen 5 bestehen, und hat dazwischen verlaufende Spannuten 6. Im vorliegenden Fall verlaufen die Spannuten 6 und die Schneidstollen 4 bzw. Gruppen von Schneidzähnen auf einer relativ steilen, spiraligen Kurve.

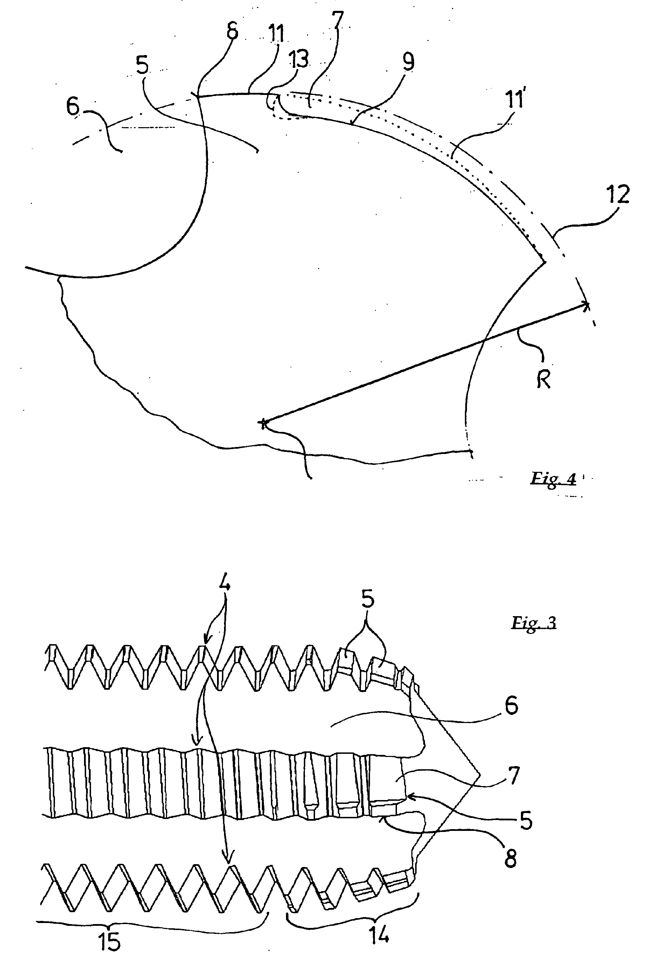

Figur 3 zeigt eine Vergrößerung des Schneidenteils 3. Der Schneidenteil 3 ist in axialer Richtung aufgeteilt in einen sogenannten Anschnitt 14 und einen Führungsabschnitt 15. Dabei wird das Hauptvolumen der beim Schneiden von Gewinden erzeugten Späne nahezu ausschließlich in Anschnittbereich 14 erzeugt, während der Führungsteil 15, wie der Name schon sagt, in wesentlichen der Führung in dem bereits von den Zähnen des Anschnittbereiches geschnittenen Gewindegängen dient. In Umfangsrichtung ist der Schneidenteil aufgeteilt in Schneidstollen 4 und Spannuten 6. Die Schneidstollen 4 bestehend jeweils aus einer hier axial verlaufenden Gruppe von Zähnen 5, von denen die vorderen Zähne, wie bereits erwähnt, den Anschnitt bilden und die hinteren Zähne nicht oder nur in geringem Umfang schneiden und, wie ebenfalls bereits erwähnt, im wesentlichen nur noch der Führung in dem Gewinde dienen, wodurch auch die Zähne des Anschnittbereiches genau auf die Spiralbahn in der gedachten Verlängerung der Gewindegänge gezwungen werden.

Wie man sieht, ist die erfindungsgemäße Modifikation in der dargestellten Ausführungsform im wesentlichen auf den Anschnittbereich 14 beschränkt worden, auch wenn es grundsätzlich möglich wäre, sämtliche Freiflächen der übrigen Zähne 5 der Schneidstollen 4 in der dargestellten Weise mit einer Hinterschneidung 7 zu versehen.

In der in Figur 3 mittleren Gruppe von Schneidzähnen sind an dem am weitesten vorne liegenden Schneidzahn 5 die Schneidkante 8 und die Hinterschneidung 7 mit entsprechenden Bezugszahlen gekennzeichnet.

In dem radialen Schnitt gemäß Figur 2 erkennt man, daß das hier dargestellte Gewindeschneidwerkzeug jeweils vier Gruppen 4 von Gewindeschneidzähnen 5 und vier dazwischen angeordnete Spannuten 6 hat. In dem hier dargestellten Schnitt haben zur Verdeutlichung der vorliegenden Erfindung die Freiflächen von drei der dargestellten Gewindeschneidzähne einen herkömmlichen Verlauf, so daß sich zwischen der Umfangsfläche 12 und der Freifläche 11 ein sehr schmaler, keilförmiger Spalt ergibt. Beim Rückwärtsdrehen können sich in diesem Spalt Späne verkeilen, die zum Ausbrechen der Schneidkante führen können, wenn die Späne an de Wandung des Gewindes hängen bleiben und die Freifläche bei der Rückwärtsdrehung des Gewindeschneidbohrers mit der Schneidkante über den Span hinweg gedrückt wird.

An einem der Schneidzähne erkennt man jedoch die erfindungsgemäß vorgesehene Hinterschneidung, die in Figur 4 nochmals vergrößert dargestellt ist.

Wie man sieht, entspricht die Figur 4 einem Ausschnitt aus Figur 2 mit einem vergrößert dargestellten Schneidzahn 5, der an seiner Freifläche eine Hinterschneidung 7 aufweist. Im Anschluß an die Schneidkante 8 verläuft zunächst ein kurzer Abschnitt 11 der Freifläche noch unter einem kleinen Winkel zwischen typischerweise 0,5 und 5° relativ zur strichpunktiert dargestellten Umfangsfläche 12, die von der Schneidkante 8 erzeugt wurde. In einem Abstand von der Schneidkante 8, der in etwa 18 bis 20% der in Umfangsrichtung gemessenen Länge des Schneidzahnes 5 entspricht, beginnt die Hinterschneidung 7 mit einem relativ abrupten Rücksprung der Freifläche 11 in radialer Richtung, in etwa entlang eines kreisförmig gekrümmten Bogens, so daß der Grund 9 der Hinterschneidung 7 zunächst, an dem Ende des Freiflächenabschnittes 11 beginnend, in radialer Richtung und dann entlang eines Bogens abbiegend in Umfangsrichtung und über den größten Teil seiner Länge parallel zum Umfang, d.h. parallel zu der Umfangslinie 12 verläuft.

Mit einer punktierten Linie 11' eingezeichnet ist ein herkömmlicher Freiflächenverlauf, der den erwähnten, keilförmigen Spalt zu der Umfangsfläche 12 bildet. Dagegen bildet die Hinterschneidung 7 einen Freiraum zu der Umfangsfläche 12 von konstanter Breite, der in dem dargestellten Ausführungsbeispiel etwa 4% des durch die Schneidkante 8 bestimmten Radius R des Schneidwerkzeuges ausmacht. Aufgrund des relativ abrupten, kreisbogenförmigen Verlaufs des Grundes 9 der Hinterschneidung 7 am Übergang zu dem Freiflächenabschnitt 11 werden die sich möglicherweise in der Hinterschneidung 7 ansammelnden Späne beim Rückwärtsdrehen des Gewindeschneidwerkzeuges problemlos mitgenommen, ohne in den verbleibenden, sehr schmalen Spalt zwischen dem Freiflächenabschnitt 11 und dem Umfang bzw. der Wand 12 des geschnittenen Gewindes einzudringen. Bei Bedarf kann dieser bogenförmige Übergang der Hinterschneidung 7, ausgehend von dem Schneidkantenabschnitt 11, auch noch ausgeprägter, d.h. auch in Blickrichtung des Radius noch hinterschnitten ausgestaltet sein und der Grund der Hinterschneidung 9 kann auch stellenweise noch tiefer verlaufen, wie dies durch eine gestrichelte Linie 13 angedeutet ist. Ebenso muß der Anfangsabschnitt der Hinterschneidung 7 bzw des Grundes 9 nicht gekrümmt sein, sondern kann statt dessen auch gerade und in etwa radial einwärts verlaufen, wobei die entsprechend steile Flanke dann sehr bald in Umfangsrichtung abknickt.

## Patentansprüche

1. Gewindeschneidwerkzeug (1) zum Schneiden von Innengewinden, mit einem Schaft (2) und einem Schneidenabschnitt (3), der aus mehreren Gruppen (4) von achsparallel oder spiralig angeordneten Schneidzähnen (5) und dazwischen verlaufenden Spannuten (6) besteht, wobei mindestens ein Teil der Schneidzähne (5) auf den Freiflächen (11) hinter den jeweiligen Schneidkanten (8) eine radiale Hinterschneidung (7) aufweist, **dadurch gekennzeichnet, daß** die Hinterschneidung (7) in einem Abstand hinter der Schneidkante (8) beginnt, der zwischen 5% und 50%, der in Umfangsrichtung gemessenen Schneidzahnlänge liegt, und, ausgehend von der Freifläche (11), abrupt mit einem Rücksprung beginnt, der eine überwiegend radiale Komponente hat, so daß der Grund (9) der Hinterschneidung, gesehen in einem axialen Schnitt, ausgehend von dem schneidkantennahen Abschnitt, zunächst im wesentlichen radial und dann zur Umfangsrichtung hin gekrümmt verläuft

2. Gewindeschneidwerkzeug nach Anspruch 1, **dadurch gekennzeichnet, daß** die Hinterschneidung (7) in einem Abstand hinter der Schneidkante (8) beginnt, der zwischen 10% und 30% der in Umfangsrichtung gemessenen Schneidzahnlänge liegt.

3. Gewindeschneidwerkzeug nach einem der Ansprüche 1 oder 2, **dadurch gekennzeichnet, daß** die Hinterschneidung (7) zum hinteren Ende des Schneidzahnes hin und über mindestens die Hälfte der Schneidzahnlänge im wesentlichen parallel zur Umfangsrichtung ausläuft.

4. Gewindeschneidwerkzeug nach Anspruch 3, **dadurch gekennzeichnet, daß** der Grund (9) der Hinterschneidung, ausgehend vom radial am weitesten innenliegenden Punkt im wesentlichen parallel zur Umfangsrichtung verläuft.

5. Gewindeschneidwerkzeug nach einem der Ansprüche 1 bis 4, **dadurch gekennzeichnet, daß** die Hinterschneidung (7) in radialer Richtung eine maximale Tiefe zwischen 0,5 und 10%, vorzugsweise zwischen 2% und 4 % des Radius des Gewindeschneidwerkzeuges hat.

6. Gewindeschneidwerkzeug nach einem der Ansprüche 1 bis 5, **dadurch gekennzeichnet, daß** die Hinterschneidung (7), ausgehend von dem durch den betreffenden Schneidzahn (5) geschnittenen Gewinderadius (R) eine Tiefe zwischen 0,1 und 2 mm hat.

7. Gewindeschneidwerkzeug nach einem der Ansprüche 1 bis 6, **dadurch gekennzeichnet, daß** die Tiefe der Hinterschneidung (7) in etwa dem radialen Einzug einer herkömmlichen Freifläche am hinteren Ende eines Schneidzahnes entspricht.

8. Gewindeschneidwerkzeug nach einem der Ansprüche 1 bis 7, **dadurch gekennzeichnet, daß** die Hinterschneidung (7) nur an dem axial am weitesten vorn liegenden Anschnittbereich des Schneidzähne (5) der jeweiligen Schneidstollen (4) vorgesehen ist.

9. Gewindeschneidwerkzeug nach Anspruch 8, **dadurch gekennzeichnet, daß** die vorderen zwei bis fünf Schneidzähne einer Gruppe (4) von Schneidzähnen eine Hinterschneidung (7) aufweisen.

10. Gewindeschneidwerkzeug nach einem der Ansprüche 1 bis 9, **dadurch gekennzeichnet, daß** er aus Vollhartmetall besteht.

11. Gewindeschneidwerkzeug nach einem der Ansprüche 1 bis 10, **dadurch gekennzeichnet daß** die Gruppen (4) von Schneidzähnen (5) und die Spannuten (6) im wesentlichen achsparallel verlaufen.

## Claims

1. Thread cutting tool (1) for cutting female threads, with a shaft (2) and a cutting section (3) that is composed of several groups (4) of axially parallel or spirally arranged cutting teeth (5) and grooves for the chippings (6) in between them, wherein at least a portion of the cutting teeth (5) is provided with a radial undercut (7) on the flanks (11) behind the respective cutting edges (8), **characterised in that** the undercut (7) begins at a distance behind the cutting edge (8) that is between 5% and 50% of the length of the cutting tooth measured in the circumferential direction, and proceeding from the flank (11), the undercut (7) begins abruptly with a return that has a mainly radial component, so that that the base (9) of the undercut, seen in an axial section, proceeding from the section close to the cutting edges, runs firstly substantially radially and then curved towards the direction of the circumference.

2. Thread cutting tool according to claim 1, **characterised in that** the undercut (7) begins at a distance behind the cutting edge (8) that is between 10% and 30% of the length of the cutting tooth measured in the circumferential direction.

3. Thread cutting tool according to one of claims 1 or 2, **characterised in that** the undercut (7) runs substantially parallel to the direction of the circumference towards the rear end of the cutting tooth and over at least half the length of the cutting tooth.

4. Thread cutting tool according to claim 3, **characterised in that** proceeding from the point lying radially innermost, the base (9) of the undercut runs substantially parallel to the direction of the circumference.

5. Thread cutting tool according to one of claims 1 to 4, **characterised in that** in the radial direction the undercut (7) has a maximum depth of between 0.5 and 10%, preferably between 2% and 4% of the radius of the thread cutting tool.

6. Thread cutting tool according to one of claims 1 to 5, **characterised in that** proceeding from the thread radius (R) cut by the cutting tooth in question (5), the undercut (7) has a depth of between 0.1 and 2 mm.

7. Thread cutting tool according to one of claims 1 to 6, **characterised in that** the depth of the undercut (7) corresponds approximately to the radial taper of a conventional flank at the rear end of a cutting tooth.

8. Thread cutting tool according to one of claims 1 to 7, **characterised in that** the undercut (7) is only provided on the axially furthest forward initial cut area of the cutting teeth (5) of the respective cutter rows (4).

9. Thread cutting tool according to claim 8, **characterised in that** the forward two to five cutting teeth of a group (4) of cutting teeth have an undercut (7).

10. Thread cutting tool according to one of claims 1 to 9, **characterised in that** it is composed of solid carbide.

11. Thread cutting tool according to one of claims 1 to 10, **characterised in that** the groups (4) of cutting teeth (5) and the chipping grooves (6) run substantially axially parallel.

## Revendications

1. Outil à fileter (1) destiné à réaliser des taraudages, ledit outil à fileter comportant une queue (2) et une portion de coupe (3) qui est constituée de plusieurs groupes (4) de dents de coupe (5) disposées en spirale ou parallèlement à l'axe et de rainures à copeaux (6) s'étendant entre lesdits groupes, au moins une partie des dents de coupe (5) présentant sur les surfaces libres (11), en arrière des arêtes de coupe respectives (8), une contre-dépouille radiale (7), **caractérisé en ce que** la contre-dépouille (7) commence à une distance en arrière de l'arête de coupe (8) qui est comprise entre 5% et 50% de la longueur des dents de coupe mesurée dans la direction périphérique, et commence, à partir de la surface libre (11), brutalement par un retrait qui présente une composante essentiellement radiale de sorte que, dans une vue en coupe axiale, le fond (9) de la contre-dépouille présente, en partant de la portion proche des arêtes de coupe, une allure curviligne tout d'abord dans une direction sensiblement radiale puis dans une direction périphérique.

2. Outil à fileter selon la revendication 1, **caractérisé en ce que** la contre-dépouille (7) commence à une distance en arrière de l'arête de coupe (8) qui est comprise entre 10% et 30% de la longueur des dents de coupe mesurée dans la direction périphérique.

3. Outil à fileter selon la revendication 1 ou 2, **caractérisé en ce que** la contre-dépouille (7) s'étend sensiblement parallèlement à la direction périphérique vers l'extrémité arrière de la dent de coupe et sur au moins la moitié de la longueur de la dent de coupe.

4. Outil à fileter selon la revendication 3, **caractérisé en ce que** le fond (9) de la contre-dépouille s'étend sensiblement parallèlement à la direction périphérique en partant du point radialement le plus intérieur.

5. Outil à fileter selon l'une des revendications 1 à 4, **caractérisé en ce que** la contre-dépouille (7) a, dans une direction radiale, une profondeur maximale comprise entre 0,5 et 10%, de préférence entre 2% et 4%, du rayon de l'outil à fileter.

6. Outil à fileter selon l'une des revendications 1 à 5**, caractérisé en ce que** la contre-dépouille (7) a une profondeur comprise entre 0,1 et 2 mm, en partant du rayon (R) du filet découpé par la dent de coupe concernée.

7. Outil à fileter selon l'une des revendications 1 à 6, **caractérisé en ce que** la profondeur de la contre-dépouille (7) correspond à peu près au retrait radial d'une surface libre classique à l'extrémité arrière d'une dent de coupe.

8. Outil à fileter selon l'une des revendications 1 à 7, **caractérisé en ce que** la contre-dépouille (7) est prévue seulement au niveau de la région d'attaque des dents de coupe (5) des barrettes de coupe respectives (4) qui est située axialement la plus en avant.

9. Outil à fileter selon la revendication 8, **caractérisé en ce que** les deux à cinq dents de coupe avant d'un groupe (4) de dents de coupe présentent une contre-dépouille (7).

10. Outil à fileter selon l'une des revendications 1 à 9, **caractérisé en ce qu'**il est en un métal dur plein.

11. Outil à fileter selon l'une des revendications 1 à 10, **caractérisé en ce que** les groupes (4) de dents de coupe (5) et les rainures à copeaux (6) s'étendent sensiblement parallèlement à l'axe.
